# EUROPÄISCHE PATENTANMELDUNG

(11) **EP 2 065 236 A1**
(43) Veröffentlichungstag der Anmeldung: **03.06.2009**
(21) Anmeldenummer: 08020702.0
(22) Anmeldetag: 28.11.2008
(51) Int. Cl.: B60J 5/04, B60R 13/02

(54) **Tür-Innenverkleidungs-Ausstattung, Fahrzeugtür und Montageverfahren**

(30) Priorität: 30.11.2007 DE 102007057807
(71) Anmelder: Volkswagen Aktiengesellschaft, 38436 Wolfsburg (DE)
(72) Erfinder: Köhler, Jens, 38170 Schöppenstedt (DE); Büttner, Rainer, 38442 Wolfsburg (DE); Meyer, Andreas, 38102 Braunschweig (DE)

(57) **Zusammenfassung**

Die Erfindung betrifft eine Tür-Innenverkleidungs-Ausstattung einer Fahrzeugtür, mit einer Tür-Innenbetätigung (20), einem die Tür-Innenbetätigung (20) mit einem Türschloss verbindenden Betätigungsübertragungsmittel (14) und einem wenigstens einteiligen Innenverkleidungseinsatz und mit Befestigungsmitteln zum Befestigen an der Fahrzeugtür.

Es ist vorgesehen, dass die Tür-Innenbetätigung (20) als ein zu einer Baugruppe zusammengefasstes Tür-Innenbetätigungs-Modul ausgebildet ist, welches eine Trägerstruktur aufweist, wobei die Trägerstruktur (20) einen integrierten, sie wenigstens abschnittsweise an ihrem Außenrand umlaufenden Auflagerand (17) aufweist, welcher wenigstens ein Befestigungsmittel (18) zum Befestigen des Innenverkleidungseinsatzes umfasst, wobei die Trägerstruktur (20) auf der zur Fahrzeugtür zugewandten Seite wenigstens ein zweites Befestigungsmittel zum Befestigen an der Fahrzeugtür aufweist und mit diesem an der Fahrzeugtür befestigt ist, und der Innenverkleidungseinsatz eine Aussparung aufweist, die mit einen äußeren Rand eines Dekorrahmens (16) korrespondiert und an der zur Fahrzeugtür zugewandten Seite des Innenverkleidungseinsatzes mit den Befestigungsmitteln (18) der Trägerstruktur (20) korrespondierende und in Eingriff tretende Befestigungsmittel aufweist.

## Beschreibung

Die Erfindung betrifft eine Tür-Innenverkleidungs-Ausstattung mit den im Oberbegriff des Anspruchs 1 genannten Merkmalen, Verfahren zur Montage derselben an der Fahrzeugtür mit den im Oberbegriff der Ansprüche 13, 14, 15 oder 16 genannten Merkmalen und eine Fahrzeugtür mit einer Tür-Innenverkleidungs-Ausstattung mit den im Oberbegriff des Anspruchs 12 genannten Merkmalen.

Es ist bekannt, die Türen eines Fahrzeugs von innen mit dekorativen Verblendungen zu verkleiden, um eine ansehnliche und ebenso alltagstaugliche Innenraumausstattung zu realisieren. Gewöhnlich ist diese Türverkleidung als ein optisch und funktionell geformtes dekoratives, im Wesentlichen plattenförmiges Türverkleidungs-Teil wenigstens einteilig ausgeführt und mit Hilfe von Befestigungselementen wie beispielsweise einrastenden Steckverbindungen an den dafür vorgesehenen Blechflächen der jeweiligen Fahrzeugtür angebaut. Die Tür eines Fahrzeugs hat verschiedene Bedien- und Betätigungselemente aufzunehmen, wie zum Beispiel Türentriegelungshebel, manuelle Fensterheberkurbel, Türgriff, elektrische Knöpfe und Schalter für elektrische Fensterheber, elektrische Zentralverriegelung und Außenspiegel. Die Montage aller dieser Bestandteile an der Fahrzeugtür ist recht aufwändig und hat deswegen einige bekannte Versuche zur Vereinfachung hervorgebracht. Insbesondere die Tür-Innenbetätigung zum Öffnen der Tür stellt ein solches Problem dar, während beispielsweise der Türgriff relativ einfach in dem plattenförmigen Türverkleidungs-Teil integriert ausgebildet sein kann.

In einer bekannten Aufbaukonstruktion sind die Einzelteile einer Tür-Innenbetätigung direkt ohne eine dazwischen gesetzte Trägerstruktur an der Tür angebaut, was zur Folge hat, dass die einzelnen Bauteile aufwändig an der Tür einzubauen und im Service aufwändig voneinander zu trennen sind. Das plattenförmige Türverkleidungs-Teil wird in diesem Fall nachträglich an der Tür angebaut und beispielsweise mit Hilfe von zusätzlichen, dekorativ gestalteten, randbestimmenden Teilen mit der Tür-Innenbetätigung in Eingriff gebracht.

In einer anderen bekannten Lösung ist die Tür-Innenbetätigung an der Türverkleidung befestigt, was zur Folge hat, dass zum einen das Anbauen an der Fahrzeugtür ein mühsames manuelles Hantieren in einem engen Raum zwischen der Tür und der Innenverkleidung mit der daran befestigten Tür-Innenbetätigung bedingt und zum anderen muss eine solche Türverkleidung in einer relativ frühen Montagephase eines Fahrzeugs fertiggestellt sein, damit die Türen zur weiteren Montage geöffnet und geschlossen sein können. Hierdurch verweilt die fertige Türverkleidung eine längere Zeit im Zugriffsbereich arbeitender Montagemitarbeiter und unterliegt daher einer höheren Wahrscheinlichkeit, zufällig beschädigt, beispielsweise verkratzt zu werden, was zu einer anschließenden aufwändigen und teueren Nachbesserung führt.

Bei einer weiteren bekannten Aufbauart ist die Tür-Innenbetätigung mit einem mehrteiligen Rahmen wie bei dem Volkswagen Passat B3 ausgeführt, das heißt zunächst eine als Baugruppe an der Fahrzeugtür vormontierte Tür-Innenbetätigung, danach eine Dichtung, nachfolgend die Montage der Türverkleidung und danach noch ein in Eingriff tretender umlaufender Rahmen, wodurch eine Gruppierung der einzelnen Bauteile in mehrere Unterbaugruppen erfolgt.

Der Erfindung liegt die Aufgabe zugrunde, möglichst früh im Montageablauf eines Fahrzeugs eine technisch funktionsfähige Tür einbauen zu können, das heißt eine Tür, die geöffnet und geschlossen sein kann, ohne hierfür das dekorative Türverkleidungs-Teil anbauen zu müssen, welches möglichst spät im Montageablauf des Fahrzeugs an die Fahrzeugtür anbaubar sein soll, sowie eine einfache und schnelle, das heißt auch eine kostensparende Montage aller Teile einer Tür-Innenbetätigung und des Türverkleidungs-Teils an einer Fahrzeugtür zu ermöglichen und hierbei qualitätssteigende und sichernde Konstruktionsmerkmale und Verfahrensschritte vorzusehen.

Die erfindungsgemäße Aufgabe wird durch eine Tür-Innenverkleidungs-Ausstattung einer Fahrzeugtür, mit einer Tür-Innenbetätigung, einem die Tür-Innenbetätigung mit einem Türschloss verbindenden Betätigungsübertragungsmittel, einem wenigstens einteiligen Innenverkleidungseinsatz und mit Befestigungsmitteln zum Befestigen an der Fahrzeugtür gelöst, wobei die Tür-Innenbetätigung als ein zu einer Baugruppe zusammengefasstes Tür-Innenbetätigungs-Modul ausgebildet ist, welches eine Trägerstruktur aufweist, wobei die Trägerstruktur einen integrierten, sie wenigstens abschnittsweise an ihrem Außenrand umlaufenden Auflagerand aufweist, welcher wenigstens ein Befestigungsmittel zum Befestigen des Innenverkleidungseinsatzes umfasst, wobei die Trägerstruktur auf der zur Fahrzeugtür zugewandten Seite wenigstens ein zweites Befestigungsmittel zum Befestigen an der Fahrzeugtür aufweist und mit diesem an der Fahrzeugtür befestigt ist, und der Innenverkleidungseinsatz eine Aussparung aufweist, die mit einen äußeren Rand eines Dekorrahmens korrespondiert und an der zur Fahrzeugtür zugewandten Seite des Innenverkleidungseinsatzes mit den Befestigungsmitteln der Trägerstruktur korrespondierende und in Eingriff tretende Befestigungsmittel aufweist

in einer bevorzugten Ausgestaltung der Erfindung umfasst die Tür-Innenbetätigung einen Tür-Innenbetätigungshebel, eine Griffmulde und eine elektrische und/oder elektronische Schaltereinheit.

In einer weiteren bevorzugten Ausgestaltung der vorliegenden Erfindung weist die äußere Fläche des Dekorrahmens und/oder der Griffmulde eine optisch wirkende glatte oder strukturierte Oberfläche auf. Mit den erfindungsgemäßen Mitteln ist es möglich, die sichtbaren Oberflächen der vorzugsweise aus einem Kunststoff herzustellenden Bauteile der Tür-Innenbetätigung als dekorative Gestaltungselemente im Innenraum eines Fahrzeugs zu verwenden. Das Gleiche ist auch erreicht, wenn die äußere Fläche des Dekorrahmens und/oder der Griffmulde einen aufgetragenen, optisch wirkenden Folieneinsatz aufweist, oder wenn die optisch wirkende Oberfläche des Dekorrahmens und/oder der Griffmulde als eine Narbungs-Oberflächenstruktur einer vorbestimmten Feinheit ausgeführt ist.

In einer weiteren bevorzugten Ausgestaltung der vorliegenden Erfindung ist die elektrische und/oder elektronische Schaltereinheit in der Trägerstruktur des Tür-Innenbetätigungs-Moduls integriert eingebaut oder eine Blendenklappe an der hierfür vorgesehenen, in der Trägerstruktur ausgesparten Stelle eingebaut.

In noch einer bevorzugten Ausgestaltung der vorliegenden Erfindung ist
das Befestigungsmittel an dem Auflagerand der Trägerstruktur als wenigstens eine Öffnung ausgeführt und das mit diesen Öffnungen korrespondierende Befestigungsmittel auf der der Fahrzeugtür zugewandten Seite des Innenverkleidungseinsatzes als darin einrastende/r Eingriffstift/e ausgeführt.

In einer weiteren bevorzugten Ausgestaltung der vorliegenden Erfindung sind die in die Öffnungen einrastenden Stifte durch Aufbringen einer vorgegebenen Eingriffskraft aus dem Eingriff mit den Öffnungen lösbar. In dieser Ausführung ist gewährleistet, dass bei einer Demontage der Türverkleidung im Servicebetrieb keine Zerstörung der Befestigungselemente erfolgen muss und ein Wiederanbau mit gleichen Befestigungselementen möglich ist.

Das Betätigungsübertragungsmittel kann vorzugsweise als ein Seilzug ausgeführt sein. Alternativ kann es auch in Gestalt von Stäben und Stangen ausgebildet sein, die auch in der Lage sind, Druck- oder Zugkräfte zu übertragen. Alternativ kann es auch als Strom- oder Signalkabel oder als Hydraulikleitung ausgebildet sein, falls das Türschloss elektrisch oder hydraulisch betätigbar ist.

In noch einer bevorzugten Ausgestaltung der vorliegenden Erfindung ist
wenigstens eine weitere Trägerstruktur von erfindungsgemäßer Art an der gleichen Fahrzeugtür als eine vorgefertigte Baugruppe angebaut, die einen wenigstens abschnittsweise umlaufenden Auflagerand mit darin ausgebildeten Befestigungsmitteln aufweist und weitere Bedien- und Betätigungselemente wie elektrische und/oder elektronische Schaltereinheiten trägt, wobei in dem Innenverkleidungseinsatz eine zu dieser Trägerstruktur korrespondierende Aussparung vorgesehen ist. Diese zusätzliche Trägerstruktur kann für weitere Tasten, für Lautsprecher oder Airbageinheiten verwendet sein und ist im gleichen Montageablauf, ohne ihn zwingend zu verändern, ausführbar.

In einer vorteilhaften, bevorzugten Ausgestaltung der vorliegenden Erfindung umläuft der Auflagerand die Trägerstruktur vollständig. Auf diese Weise ist eine gleichmäßig an der Türverkleidung verlaufende Fuge gewährleistet, die für den optischen Eindruck sehr wichtig ist.

Nach einem weiteren Aspekt der vorliegenden Erfindung weist eine erfindungsgemäße Fahrzeugtür eine oben beschriebene Tür-Innenverkleidungs-Ausstattung auf.

Nach noch einem weiteren Aspekt der vorliegenden Erfindung ist ein Verfahren zum Montieren einer Tür-Innenverkleidungs-Ausstattung an einer Fahrzeugtür dahingehend erfindungsgemäß ausgestaltet, dass
- in einem ersten Vormontageschritt ein Tür-Innenbetätigungs-Modul, aufweisend mindestens eine Trägerstruktur bereitgestellt wird,
- in einem zweiten Vormontageschritt ein Betätigungsübertragungsmittel mit dem Tür-Innenbetätigungs-Modul verbunden wird und an einer Fahrzeugtür angebaut wird,
- in einem nachfolgenden ersten Montageschritt das Tür-Innenbetätigungs-Modul an der Innenseite der Fahrzeugtür befestigt wird, und das mit dem Tür-Innenbetätigungs-Modul verbundene Betätigungsübertragungsmittel mit einem an der Fahrzeugtür vorhandenen Schlossmechanismus verbunden wird,
- in einem zweiten Montageschritt ein vorgefertigter Innenverkleidungseinsatz an der Fahrzeugtür mit dem zuvor angebauten Tür-Innenbetätigungs-Modul angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul vorgesehene Befestigungsmittel mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

Nach einem anderen Aspekt der vorliegenden Erfindung ist ein Verfahren zum Montieren einer Tür-Innenverkleidungs-Ausstattung an einer Fahrzeugtür dahingehend erfindungsgemäß gestaltet, dass
- in einem Vormontageschritt ein Tür-Innenbetätigungs-Modul, aufweisend mindestens eine Trägerstruktur, bereitgestellt und ein Betätigungsübertragungsmittel mit dem Tür-Innenbetätigungs-Modul verbunden wird,
- in einem nachfolgenden ersten Montageschritt das Tür-Innenbetätigungs-Modul an der Innenseite der Fahrzeugtür befestigt wird und das mit dem Tür-Innenbetätigungs-Modul verbundene Betätigungsübertragungsmittel mit einem Schlossmechanismus für die Fahrzeugtür verbunden wird, wobei zum Zeitpunkt des Verbindens des Betätigungsübertragungsmittel mit dem Schlossmechanismus der Schlossmechanismus an der Fahrzeugtür angebracht ist oder anschließend an der Fahrzeugtür befestigt wird,
- in einem zweiten Montageschritt ein vorgefertigter Innenverkleidungseinsatz an der Fahrzeugtür mit dem zuvor angebauten Tür-Innenbetätigungs-Modul angebaut wird,
   wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul vorgesehene Befestigungsmittel mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

Nach einem noch anderen Aspekt der vorliegenden Erfindung ist ein Verfahren zum Montieren einer Tür-Innenverkleidungs-Ausstattung an einer Fahrzeugtür dahingehend erfindungsgemäß ausgestaltet, dass
- in einem Vormontageschritt ein Tür-Innenbetätigungs-Modul, aufweisend mindestens eine Trägerstruktur, bereitgestellt und an der Innenseite der Fahrzeugtür befestigt wird,
- in einem anderen Vormontageschritt ein Betätigungsübertragungsmittel mit einem Schlossmechanismus für die Fahrzeugtür verbunden wird,
- in einem nachfolgenden ersten Montageschritt das mit dem Schlossmechanismus verbundene Betätigungsübertragungsmittel mit dem Tür-Innenbetätigungs-Modul verbunden wird, wobei zum Zeitpunkt des Verbindens des Betätigungsübertragungsmittel mit dem Tür-Innenbetätigungs-Modul der Schlossmechanismus an der Fahrzeugtür angebracht ist oder anschließend an der Fahrzeugtür befestigt wird,
- in einem zweiten Montageschritt ein vorgefertigter Innenverkleidungseinsatz an der Fahrzeugtür mit dem zuvor angebauten Tür-Innenbetätigungs-Modul angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul vorgesehene Befestigungsmittel mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

Nach einem weiteren Aspekt der vorliegenden Erfindung wird ein Verfahren zum Montieren einer Tür-Innenverkleidungs-Ausstattung an einer Fahrzeugtür vorgeschlagen, das erfindungsgemäß vorsieht, dass
- in einem Vormontageschritt ein Tür-Innenbetätigungs-Modul, aufweisend mindestens eine Trägerstruktur, bereitgestellt wird und an der Innenseite der Fahrzeugtür befestigt wird,
- in einem anderen Vormontageschritt ein Schlossmechanismus für die Fahrzeugtür an der Fahrzeugtür angebracht wird,
- in einem nachfolgenden ersten Montageschritt ein Betätigungsübertragungsmittel mit dem Tür-Innenbetätigungs-Modul und mit dem Schlossmechanismus verbunden wird,
- in einem zweiten Montageschritt ein vorgefertigter Innenverkleidungseinsatz an der Fahrzeugtür mit dem zuvor angebauten Tür-Innenbetätigungs-Modul angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul vorgesehene Befestigungsmittel mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

In einer bevorzugten Ausgestaltung der erfindungsgemäßen Verfahren ist das in einem Montage- beziehungsweise Vormontageschritt zu verbindende Betätigungsübertragungsmittel ein Seilzug.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der einzigen zugehörigen Zeichnung, die eine perspektivische Teilausschnittansicht der erfindungsgemäßen Tür-Innenverkleidungs-Ausstattung einer Fahrzeugtür mit einer Tür-Innenbetätigung zeigt, näher erläutert.

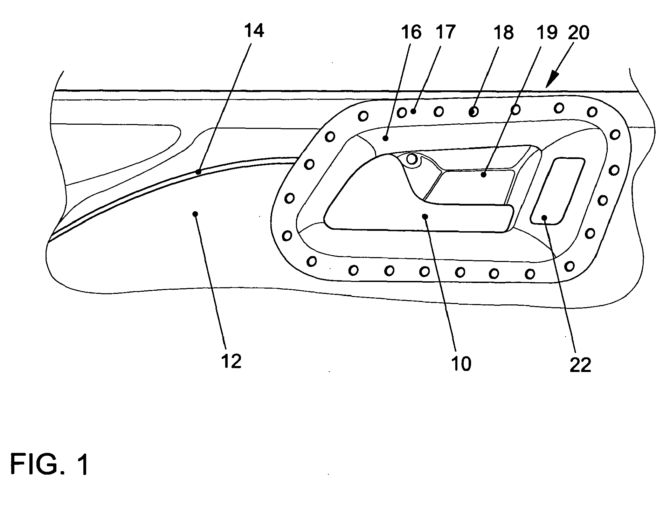

Figur 1 zeigt eine perspektivische Teilausschnittansicht der erfindungsgemäßen Tür-Innenverkleidungs-Ausstattung einer Fahrzeugtür mit einer Tür-Innenbetätigung 20, die als eine integrierte Trägerstruktur 20 beispielsweise als ein Spritzgussteil einteilig oder mehrteilig ausgeführt ist.

Die Trägerstruktur 20 zeigt in dem dargestellten erfindungsgemäßen Beispiel einen erfindungsgemäß umlaufenden Dekorrahmen 16 auf, welcher derart gewölbt ausgeführt ist, dass er in Richtung des Fahrzeuginnenraums vorragt und hierdurch sowohl dekorativ vorteilhaft wirkt, als auch für eine hervorgehobene Positionierung der darin ausgesparten Griffmulde 19 und in dieser Griffmulde schwenkbar an einer Drehachse gelagerten Tür-Innenbetätigungshebels 10 sorgt und für eine Betätigung durch die Hand eines Benutzers ergonomisch gewählt ist.

Neben der Griffmulde 19 ist eine Schaltereinheit 22 angeordnet, die beispielsweise Schalter zum Betätigen des elektrischen Fensterhebers aufweist. Alternativ kann die für die Schaltereinheit 22 vorgesehene Aussparung mit einem Blendendeckel verschlossen sein, wenn das Fenster mit einer manuellen Betätigung als Ausstattungsmerkmal ausgewählt worden ist.

Die Trägerstruktur 20 weist einen vollständig und mit einer gleichmäßigen Breite umlaufenden Auflagerand 17 auf, welcher vorzugsweise gleichmäßig beabstandet umlaufend mit einer Vielzahl von als Öffnungen 18 ausgeführten Befestigungsmitteln 18 ausgestattet ist. Diese Trägerstruktur 20 ist vorzugsweise mit allen darin enthaltenen Bestandteilen an einem dafür produktionstechnisch eingerichteten Ort, zum Beispiel bei einem Lieferanten oder an einem Vormontagearbeitsplatz, vorgefertigt.

Der in Figur 1 mit der Tür-Innenbetätigung 20 verbundene Seilzug 14 kann wahlweise bereits an ihr ebenso vorher angebaut sein, oder - alternativ dazu - vorher an der Fahrzeugtür 12 angebaut sein. In beiden Fällen kann der Anschluss des Seilzugs 14, der oft Bowdenzug genannt wird, ohne Einengung durch andere Teile wie Tür-Innenverkleidung ausgeführt sein, wodurch dieser Vorgang sicherer, ohne Qualitätsausfälle und schnell ausführbar ist.

Ebenso übersichtlich gestaltet sich der elektrische Anschluss der integrierten Schalteinheit 22 mit Hilfe einer (nicht dargestellten) Steckverbindung, die auch ohne eine Verengung durch andere Teile wie Türverkleidung gesteckt sein kann, wodurch auch dieser Vorgang sicherer, ohne Qualitätsausfälle und schnell ausführbar ist.

Nachdem beide funktionellen Anschlüsse erfolgt sind, kann die Trägerstruktur der Tür-Innenbetätigung 20 mit Hilfe eines nicht gezeigten, weil in der Ansicht in Figur 1 auf der Rückseite vorgesehen, Befestigungsmittels an dem Innenblech 12 der Fahrzeugtür in wenigstens einem dafür vorgesehenen Befestigungsmittel befestigt werden. Dieses nicht sichtbare Befestigungsmittel auf der Rückseite der Trägerstruktur 20 kann beispielsweise wenigstens eine Öffnung und ein darin einrastend in Eingriff zu bringender Stiftstecker sein. Wichtig ist, dafür zu sorgen, dass die so angebrachte Innenbetätigung 20 eine ihr zugewiesene Position und Ausrichtung beibehält, wenn der Tür-Innenbetätigungshebel 10 zum Öffnen der Tür betätigt wird. Diese Position kann ganz genau und fest vorgegeben sein oder - alternativ - der Trägerstruktur 20 eine gewisse Bewegungsfreiheit gewähren.

In diesem Zustand kann in einem Montageablauf die mit der Tür-Innenbetätigung 20 ausgestattete Fahrzeugtür ohne Einschränkungen für produktionsbedingte Arbeitsvorgänge geöffnet und geschlossen sein, wodurch der Zeitpunkt zum Anbringen der Türverkleidung möglichst spät in dem Montageablauf gewählt sein kann.

Beim Anbauen einer Türverkleidung (nicht dargestellt) wird diese sowohl an den Befestigungsmitteln ausgerichtet, die zum Befestigen an dem Innenblech 12 der Fahrzeugtür vorgesehen sind, als auch an den Befestigungsmitteln 18, das heißt den Öffnungen 18 in dem umlaufenden Auflagerand 17. Die auf der zur Fahrzeugtür zugewandten Seite der anzubauenden Türverkleidung vorgesehenen Befestigungsmittel können vorzugsweise einrastend ausgeführte Stifte sein, die in die Öffnungen 18 an der Trägerstruktur 20 eingeführt werden und dort mit diesen Öffnungen in Eingriff treten. Vorzugsweise sind diese Befestigungsstifte so ausgebildet, dass sie durch Aufwendung einer bestimmten Kraft aus dem Eingriff in den Öffnungen 18 gelöst sein können, wodurch eine einfache Demontage der Türverkleidung jederzeit möglich ist, die es erfindungsgemäß nicht erforderlich macht, die Tür-Innenbetätigung von ihren funktionalen Anschlüssen an dem Seilzug 14 und den elektrischen Kontakten zu trennen.

Die vorangehende Ausführung der vorliegenden Erfindung ist lediglich beispielhaft und nicht als die vorliegende Erfindung einschränkend auszulegen. Die vorliegende Erfindungslehre kann leicht auf andere Anwendungen übertragen sein. Die Beschreibung des Ausführungsbeispiels ist zur Veranschaulichung vorgesehen und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den nachfolgenden Ansprüchen definiert ist.

### Bezugszeichenliste

- 10: Tür-Innenbetätigungshebel
- 12: Innenblech, Fahrzeugtür
- 14: Seilzug
- 16: umlaufender Dekorrahmen
- 17: Auflagerand
- 18: Befestigungsmittel, Öffnung
- 19: Griffmulde
- 20: Tür-Innenbetätigung, Trägerstruktur
- 22: elektrische und/oder elektronische Schaltereinheit

## Patentansprüche

1. Tür-Innenverkleidungs-Ausstattung einer Fahrzeugtür, mit einer Tür-Innenbetätigung (20), einem die Tür-Innenbetätigung (20) mit einem Türschloss verbindenden Betätigungsübertragungsmittel (14) und einem wenigstens einteiligen Innenverkleidungseinsatz und mit Befestigungsmitteln zum Befestigen an der Fahrzeugtür,
**dadurch gekennzeichnet, dass**
die Tür-Innenbetätigung (20) als ein zu einer Baugruppe zusammengefasstes Tür-Innenbetätigungs-Modul ausgebildet ist, welches eine Trägerstruktur aufweist, wobei die Trägerstruktur (20) einen integrierten, sie wenigstens abschnittsweise an ihrem Außenrand umlaufenden Auflagerand (17) aufweist, welcher wenigstens ein Befestigungsmittel (18) zum Befestigen des Innenverkleidungseinsatzes umfasst, wobei die Trägerstruktur (20) auf der zur Fahrzeugtür zugewandten Seite wenigstens ein zweites Befestigungsmittel zum Befestigen an der Fahrzeugtür aufweist und mit diesem an der Fahrzeugtür befestigt ist, und der Innenverkleidungseinsatz eine Aussparung aufweist, die mit einen äußeren Rand eines Dekorrahmens (16) korrespondiert und an der zur Fahrzeugtür zugewandten Seite des Innenverkleidungseinsatzes mit den Befestigungsmitteln (18) der Trägerstruktur (20) korrespondierende und in Eingriff tretende Befestigungsmittel aufweist.

2. Tür-Innenverkleidungs-Ausstattung nach Anspruch 1,
**dadurch gekennzeichnet, dass**
die Tür-Innenbetätigung (20) einen Tür-Innenbetätigungshebel (10), eine Griffmulde (19) und eine elektrische und/oder elektronische Schaltereinheit (22) umfasst.

3. Tür-Innenverkleidungs-Ausstattung nach einem der vorhergehenden Ansprüche,
**dadurch gekennzeichnet, dass**
die äußere Fläche des Dekorrahmens (16) und/oder der Griffmulde (19) eine optisch wirkende glatte oder strukturierte Oberfläche aufweist.

4. Tür-Innenverkleidungs-Ausstattung nach einem der vorhergehenden Ansprüche,
**dadurch gekennzeichnet, dass**
die äußere Fläche des Dekorrahmens (16) und/oder der Griffmulde (19) einen aufgetragenen optisch wirkenden Folieneinsatz aufweist.

5. Tür-Innenverkleidungs-Ausstattung nach einem der vorhergehenden Ansprüche,
**dadurch gekennzeichnet, dass**
die optisch wirkende Oberfläche des Dekorrahmens (16) und/oder der Griffmulde (19) als eine Narbungs-Oberflächenstruktur einer vorbestimmten Feinheit ausgeführt ist.

6. Tür-Innenverkleidungs-Ausstattung nach einem der vorhergehenden Ansprüche,
**dadurch gekennzeichnet, dass**
die elektrische und/oder elektronische Schaltereinheit (22) in der Trägerstruktur (20) des Tür-Innenbetätigungs-Moduls (20) integriert eingebaut ist oder eine Blendenklappe an der hierfür vorgesehenen, in der Trägerstruktur (20) ausgesparten Stelle eingebaut ist.

7. Tür-Innenverkleidungs-Ausstattung nach einem der vorhergehenden Ansprüche,
**dadurch gekennzeichnet, dass**
die Befestigungsmittel (18) an dem Auflagerand (17) der Trägerstruktur (20) als wenigstens eine Öffnung (18) ausgeführt sind und die mit diesen Öffnungen korrespondierenden Befestigungsmittel auf der, der Fahrzeugtür zugewandten Seite des Innenverkleidungseinsatzes als darin einrastende Eingriffstifte ausgeführt sind.

8. Tür-Innenverkleidungs-Ausstattung nach Anspruch 6,
**dadurch gekennzeichnet, dass**
die in die Öffnungen (18) einrastenden Stifte durch Aufbringen einer vorgegebenen Eingriffskraft aus dem Eingriff mit den Öffnungen (18) lösbar sind.

9. Tür-Innenverkleidungs-Ausstattung nach einem der vorhergehenden Ansprüche,
**dadurch gekennzeichnet, dass**
das Betätigungsübertragungsmittel (14) als ein Seilzug (14) ausgeführt ist.

10. Tür-Innenverkleidungs-Ausstattung nach einem der vorhergehenden Ansprüche,
**dadurch gekennzeichnet, dass**
wenigstens eine weitere Trägerstruktur (20) an der gleichen Fahrzeugtür als eine vorgefertigte Baugruppe angebaut ist, einen wenigstens abschnittsweise umlaufenden Auflagerand (17) mit darin ausgebildeten Befestigungsmitteln (18) aufweist und weitere Bedien- und Betätigungselemente wie elektrische und/oder elektronische Schaltereinheiten trägt, wobei in dem Innenverkleidungseinsatz eine zu dieser Trägerstruktur (20) korrespondierende Aussparung vorgesehen ist.

11. Tür-Innenverkleidungs-Baugruppe nach einem der vorhergehenden Ansprüche,
**dadurch gekennzeichnet, dass**
der Auflagerand (17) die Trägerstruktur (20) vollständig umläuft.

12. Fahrzeugtür mit einer Tür-Innenverkleidungs-Ausstattung,
**dadurch gekennzeichnet, dass**
die Tür-Innenverkleidungs-Ausstattung nach einem der Ansprüche 1 bis 10 ausgebildet ist.

13. Verfahren zum Montieren einer Tür-Innenverkleidungs-Ausstattung an einer Fahrzeugtür,
**dadurch gekennzeichnet, dass**
- in einem ersten Vormontageschritt ein Tür-Innenbetätigungs-Modul (20), aufweisend mindestens eine Trägerstruktur (20) bereitgestellt wird,
- in einem zweiten Vormontageschritt ein Betätigungsübertragungsmittel (14) mit dem Tür-Innenbetätigungs-Modul (20) verbunden wird und an einer Fahrzeugtür angebaut wird,
- in einem nachfolgenden ersten Montageschritt das Tür-Innenbetätigungs-Modul (20) an der Innenseite der Fahrzeugtür befestigt wird, und das mit dem Tür-Innenbetätigungs-Modul (20) verbundene Betätigungsübertragungsmittel (14) mit einem an der Fahrzeugtür vorhandenen Schlossmechanismus verbunden wird,
- in einem zweiten Montageschritt ein vorgefertigter Innenverkleidungseinsatz an der Fahrzeugtür mit dem zuvor angebauten Tür-Innenbetätigungs-Modul (20) angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul (20) vorgesehene Befestigungsmittel (18) mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

14. Verfahren zum Montieren einer Tür-Innenverkleidungs-Ausstattung an einer Fahrzeugtür,
**dadurch gekennzeichnet, dass**
- in einem Vormontageschritt ein Tür-Innenbetätigungs-Modul (20), aufweisend mindestens eine Trägerstruktur (20), bereitgestellt und ein Betätigungsübertragungsmittel (14) mit dem Tür-Innenbetätigungs-Modul (20) verbunden wird,
- in einem nachfolgenden ersten Montageschritt das Tür-Innenbetätigungs-Modul (20) an der Innenseite der Fahrzeugtür befestigt wird und das mit dem Tür-Innenbetätigungs-Modul (20) verbundene Betätigungsübertragungsmittel (14) mit einem Schlossmechanismus für die Fahrzeugtür verbunden wird, wobei zum Zeitpunkt des Verbindens des Betätigungsübertragungsmittel (14) mit dem Schlossmechanismus der Schlossmechanismus an der Fahrzeugtür angebracht ist oder anschließend an der Fahrzeugtür befestigt wird,
- in einem zweiten Montageschritt ein vorgefertigter Innenverkleidungseinsatz an der Fahrzeugtür mit dem zuvor angebauten Tür-Innenbetätigungs-Modul (20) angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul (20) vorgesehene Befestigungsmittel (18) mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

15. Verfahren zum Montieren einer Tür-Innenverkleidungs-Ausstattung an einer Fahrzeugtür,
**dadurch gekennzeichnet, dass**
- in einem Vormontageschritt ein Tür-Innenbetätigungs-Modul (20), aufweisend mindestens eine Trägerstruktur (20), bereitgestellt und an der Innenseite der Fahrzeugtür befestigt wird,
- in einem anderen Vormontageschritt ein Betätigungsübertragungsmittel (14) mit einem Schlossmechanismus für die Fahrzeugtür verbunden wird,
- in einem nachfolgenden ersten Montageschritt das mit dem Schlossmechanismus verbundene Betätigungsübertragungsmittel (14) mit dem Tür-Innenbetätigungs-Modul (20) verbunden wird, wobei zum Zeitpunkt des Verbindens des Betätigungsübertragungsmittel (14) mit dem Tür-Innenbetätigungs-Modul (20) der Schlossmechanismus an der Fahrzeugtür angebracht ist oder anschließend an der Fahrzeugtür befestigt wird,
- in einem zweiten Montageschritt ein vorgefertigter Innenverkleidungseinsatz an der Fahrzeugtür mit dem zuvor angebauten Tür-Innenbetätigungs-Modul (20) angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul (20) vorgesehene Befestigungsmittel (18) mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

16. Verfahren zum Montieren einer Tür-Innenverkleidungs-Ausstattung an einer Fahrzeugtür,
**dadurch gekennzeichnet, dass**
- in einem Vormontageschritt ein Tür-Innenbetätigungs-Modul (20), aufweisend mindestens eine Trägerstruktur (20), bereitgestellt und an der Innenseite der Fahrzeugtür befestigt wird,
- in einem anderen Vormontageschritt ein Schlossmechanismus für die Fahrzeugtür an der Fahrzeugtür angebracht wird,
- in einem nachfolgenden ersten Montageschritt ein Betätigungsübertragungsmittel (14) mit dem Tür-Innenbetätigungs-Modul (20) und mit dem Schlossmechanismus verbunden wird,
- in einem zweiten Montageschritt ein vorgefertigter Innenverkleidungseinsatz an der Fahrzeugtür mit dem zuvor angebauten Tür-Innenbetätigungs-Modul (20) angebaut wird, wobei der Innenverkleidungseinsatz mit seiner, wenigstens ein Befestigungsmittel aufweisenden, der Fahrzeugtür zugewandten Seite an der Innenseite der Fahrzeugtür derart angelegt wird, dass Befestigungsmittel an der Fahrzeugtür mit korrespondierenden Befestigungsmitteln an dem Innenverkleidungseinsatz ineinander greifen können, und an dem Tür-Innenbetätigungs-Modul (20) vorgesehene Befestigungsmittel (18) mit den zu ihnen korrespondierenden Befestigungsmitteln an dem Innenverkleidungseinsatz ineinander eingreifen können, und anschließend mit Hilfe einer die Fahrzeugtür und den Innenverkleidungseinsatz zusammendrückenden Kraftausübung die Befestigungsmittel in Eingriff miteinander gebracht werden.

17. Verfahren nach Anspruch 13, 14, 15 oder 16,
**dadurch gekennzeichnet, dass**
das in einem Montageschritt zu verbindende Betätigungsübertragungsmittel (14) ein Seilzug ist.
